# EUROPÄISCHE PATENTSCHRIFT

(11) **EP 1 156 927 B1**
(45) Veröffentlichungstag und Bekanntmachung des Hinweises auf die Patenterteilung: **27.11.2002**
(21) Anmeldenummer: 00904997.4
(22) Anmeldetag: 01.02.2000
(51) Int. Cl.: B32B 31/08, B42D 15/00

(54) **VERFAHREN ZUR HERSTELLUNG VON MEHRSCHICHTIGEN SICHERHEITSPRODUKTEN UND EIN NACH DEM VERFAHREN HERGESTELLTES SICHERHEITSPRODUKT**
METHOD FOR PRODUCING MULTI-LAYER SECURITY PRODUCTS AND A SECURITY PRODUCT PRODUCED ACCORDING TO THIS METHOD
PROCEDE DE FABRICATION DE PRODUITS DE SECURITE MULTICOUCHES ET PRODUIT DE SECURITE FABRIQUE SELON CE PROCEDE

(30) Priorität: 24.02.1999 DE 19907940
(43) Veröffentlichungstag der Anmeldung: 28.11.2001
(73) Patentinhaber: BUNDESDRUCKEREI GmbH, D-10958 Berlin (DE)
(72) Erfinder: HOEPPNER, Harald, D-12309 Berlin (DE); LÖER, Thomas, D-10961 Berlin (DE); MÄRTENS, Detlef, D-13599 Berlin (DE); RADTKE, Michael, D-12489 Berlin (DE)
(86) Internationale Anmeldenummer: EP0000780
(87) Internationale Veröffentlichungsnummer: WO00050238

(56) Entgegenhaltungen:
- EP-A- 0 428 489
- EP-A- 0 453 131
- EP-A- 0 628 408
- EP-A- 0 721 849
- EP-A- 0 858 056
- WO-A-98/56596
- US-A- 4 507 346
- US-A- 4 691 993
- US-A- 5 743 981
- US-A- 5 817 205

## Beschreibung

Die Erfindung betrifft ein kontinuierliches Verfahren zur Herstellung von mehrschichtigen Sicherheitsprodukten und ein nach dem Verfahren hergestelltes Sicherheitsprodukt selbst.

Derartige Sicherheitsprodukte sind insbesondere Identifikations- und Sicherheitsdoku-mente, wie zum Beispiel Personalausweise, Pässe oder Führerscheinkarten, Bankkarten usw. Es können auch mit dem erfindungsgemäßen Verfahren beliebige Sicherheits- und Wertdokumente hergestellt werden. Solche Sicherheitsprodukte weisen eine Vielzahl von Sicherheitsmerkmale auf, wie zum Beispiel Irisdruck und Guillochen, Sicherheitsfarben, Melierfasern, Planchetten, Sicherheitsfäden sowie holografische Elemente. Diese Sicherheitsmerkmale sind hierbei in und/oder auf ein Trägermaterial, wie zum Beispiel Papier oder Kunststoff aufgebracht. In/auf diesem Trägermaterial können ferner Individualdaten beispielsweise des Inhabers des Sicherheitsproduktes vorgesehen/eingetragen sein.

Die unterschiedlichen Schichten einer Sicherheitskarte aus Kunststoff übernehmen verschiedene Aufgaben. Bestimmte Schichten im Karteninneren dienen als Träger von Druckinformationen (Guillochenschutzunterdruck, Legendentexte usw.) und sind zum Beispiel opak ausgelegt. Weitere Schichten können zum Beispiel mit Stoffen dotiert sein, die es ermöglichen, das Kunststoffmaterial mittels Laser (CO₂, Nd:YAG) zu personalisieren. Hinzu können weitere Schichten kommen, die zusätzliche Druckmerkmale (Sicherheitsdruck, UV-reaktive Drucke usw.) tragen können. Ein besonders strapazierfähiger, transparenter Kunststoff kann als unterste und oberste Schicht zum Schutz der Karte eingesetzt werden.

Die Herstellung solcher Sicherheitskarten ist sehr aufwendig und kostenintensiv.

Zuerst muß das in Rollenform produzierte und angelieferte Kunststoffrohmaterial (verschiedene Kunststoffe, hauptsächlich Polycarbonate mit speziellen Eigenschaften) in Bogen zerteilt werden. Der einzelne Bogen ist Träger einer festen

Nutzenanzahl. Bestimmte Bogen müssen entsprechend ihrem Einsatzzweck (Träger des Schutzdruckes, Träger von weiteren Sicherheitsmerkmalen) bedruckt werden. Anschließend müssen die einzelnen Bogen paßgenau übereinandergeführt und fixiert werden. Die so zusammengestellten Bogenlagen werden in einer Laminierpresse, die aufwendig erhitzt und auch wieder abgekühlt werden muß, miteinander verbunden/verschmolzen.
Der Kartenschichtaufbau ist damit abgeschlossen. Durch einen nachfolgenden Stanzvorgang werden die Karteneinzelnutzen gewonnen, die dann als fertiger Kartenkörper für den anschließenden Prozeß der Personalisierung zur Verfügung stehen.

Verfahrensbedingt ist die Ausstoßleistung beim Laminieren mit derartigen Pressen relativ gering.
Nachteilig bei dem oben geschilderten Verfahren nach dem Stand der Technik ist außerdem, daß bei der Herstellung von mehrschichtigen Sicherheitsdokumenten, die mittels Lasertechnik personalisiert werden, ein sehr hoher Herstellungsaufwand besteht. Außerdem ist es bei derartiger Bogenware auch relativ schwierig, paßgenau die verschiedenen Schichten übereinander zu bringen und miteinander zu verbinden.

Aus dem Stande der Technik geht dazu die EP-A-0 628 408 hervor, die ein Verfahren zur Herstellung von Sicherheitspapier beschreibt. Dabei wird zunächst das Substrat mit Sicherheitsmerkmalen bedruckt und anschließend das Substrat zwischen zwei Papierschichten laminiert. Die Substratschicht enthält also unveränderbar fest eingebrachte Sicherheitsmerkmale, die für eine ganz bestimmte Produktlinie erstellt wurde. Nachträgliche Änderungen bezüglich der eingebrachten Merkmale sind nicht möglich und auch nicht vorgesehen.

Die EP-A-0 453 131 zeigt ebenfalls ein Verfahren zur Herstellung von Sicherheitspapier mit integrierten Authentifizierungsmerkmalen. Auch dieses Verfahren nutzt ein Laminierungsverfahren zur Herstellung. Hier gilt die selbe Kritik wie bei der EP-A-0 628 408.

Die WO-A-98/56596 offenbart ein Sicherheitsdokument beispielsweise in der Form einer Banknote, welche ebenfalls aus einem beschichteten Material hergestellt ist und weitere transparente Kunststoffschichten aufweist. Die in dem Dokument angesprochene magnetische Wassermarke weist bereits schon darauf hin, dass es sich um unveränderliche Sicherheitsmerkmale handelt, weil derartige Wassermarken stets gleich sind. Es gilt somit auch zu dieser Druckschrift die oben angeführte Kritik.

Der Erfindung liegt die Aufgabe zugrunde, ein mehrschichtiges / mehrlagiges Sicherheitsprodukt vorzuschlagen, das paßgenau übereinanderliegende Schichten aufweist, die jeweils mit Sicherheitsmerkmalen ausgestattet sein können, wobei während dessen Herstellung oder auch noch nachträglich Sicherheitsmerkmale einoder angebracht werden können.

Zur Lösung der gestellten Aufgabe ist die Erfindung durch die im Anspruch 1 wiedergegebene Merkmale gekennzeichnet.

Wesentliches Merkmal der Erfindung ist, daß nun das Sicherheitsprodukt nicht mehr als Bogenware hergestellt wird, sondern daß die verschiedenen Lagen des Sicherheitsprodukts im wesentlichen getrennt voneinander als Rollenware hergestellt werden, und daß dann in einem gemeinsamen Verarbeitungsprozeß die verschiedenen Rollenbahnen zusammengeführt und zusammen laminiert werden.

In einem ersten Verfahrensschritt wird das Trägermaterial, welches z.B. ein bedruckbares Kunststoffmaterial oder Papier ist, von einer Rolle abgezogen und einem ersten Druckwerk zugeführt. Es kann hierbei einseitig oder beidseitig bedruckt werden. Danach wird es durch eine Extrusionsbeschichtungsanlage geführt, wo eine ein- oder zweiseitige Kunststoffbeschichtung aufgebracht wird, die mittels nachgeschalteter Anpreß- und Kühlwalze schließlich fest mit der bedruckten Trägerbahn verbunden wird. Die so aufgebrachte Beschichtung kann ein- oder beidseitig aus einem laseraktiven Kunststoffmaterial bestehen, welches eine spätere Personalisierung mit einem Nd:YAG-Laser oder anderen Lasern zuläßt.
Das so beschichtete Material kann nun einem weiteren Druckwerk zugeführt werden, um dann wiederum auf eine Rolle aufgewickelt zu werden.

Nach diesem ersten Verfahrensschritt, der erstmaligen Beschichtung des Trägermaterials, wird in einem zweiten Verfahrensschritt dieses beschichtete Trägermaterial als Rollenware einem relativ aufwendigen kontinuierlichen Druckprozess unterzogen, wo eine Reihe von Sicherheitsmerkmalen aufgebracht werden.

Nach dem ein- oder beidseitigen Bedrucken dieses beschichteten Trägermaterials wird dieses wiederum auf eine Rolle aufgewickelt und in eine nächste Verarbeitungsstation gebracht.

In dem dritten Verfahrensschritt wird nun das von der Rolle abgezogene, bedruckte und beschichtete Trägermaterial beidseitig mit entsprechenden Deckfolien oder Deckfolienverbunden laminiert.

Hierbei kann erfindungsgemäß vorgesehen werden, daß die zur Laminierung verwendeten Deckfolien oder Deckverbundfolien bereits zuvor mit entsprechenden Sicherheitsmerkmalen versehen sind, d.h. die Deckfolien oder Deckverbundfolien können für sich genommen bedruckt oder laseraktiv eingestellt sein.

Wichtig ist, daß in einem hochgenauen Laminierprozess die Rollenware der bedruckten und beschichteten Bahn des Trägermaterials mit der ggfs. laserfähigen und teilweise auch bedruckten Bahn der Deckfolie oder Deckverbundfolie zusammmengebracht wird und hierdurch ein mehrschichtiger, bahnenförmiger Körper hergestellt wird.

Dieser Körper, der noch in Bahnform vorliegt, weist nun alle geforderten Merkmale des Sicherheitsdokumentes auf, d.h. die verschiedenen Schichten sind paßgenau übereinanderliegend verbunden worden.

Nach dem paßgenauen Laminieren dieser Schichten ist das noch als Endlosware vorliegende Sicherheitsprodukt im wesentlichen fertiggestellt. Es wird nun zu Einzelnutzen ausgestanzt und kann nachfolgend noch weiteren Bearbeitungsschritten zum Einbringen von Sicherheitsmerkmalen unterzogen werden. Beispielsweise kann eine Oberflächenprägung erfolgen und/oder es kann eine Laserung in den Körper hinein erfolgen, d.h. auf einer beliebigen Ebene des schichtförmigen Körpers können einoder mehrere Sicherheitsmerkmale gelasert werden.

Die Laserung erfolgt hierbei vorzugsweise an den bereits ausgestanzten und geprägten Karten. Es kann jedoch auch vorgesehen werden, die Laserung noch an der laufenden Bahn vorzunehmen, d.h. vor dem Stanzvorgang.

Danach werden die so hergestellten Karten abgestapelt.

Wichtig bei der Erfindung ist, daß der zu produzierende Kartenkörper aus einem mehrschichtigen Aufbau besteht und die verwendeten Trägermaterialien sowie die anderen Funktionsschichten als Rollenware eingesetzt und verarbeitet werden und dadurch ein kontinuierlicher Prozeß möglich ist.

Der einzelne Kartenkörper wird erfindungsgemäß wie folgt hergestellt:

Ein Trägermaterial (z.B. ein Sicherheitspapier oder ein Kunststoff oder eine Kombination aus Papier und Kunststoff) wird in Rollenform in den Abwickler einer

Extrusionsbeschichtungsanlage eingehängt, abgewickelt, einseitig und/oder zweiseitig mit Kunststoff versehen und wieder aufgewickelt. Es ist auch möglich mehrere dünne Kunststoffschichten nacheinander aufzutragen. Die einzelnen Kunststoffschichten können unterschiedliche Eigenschaften (dotierte, laserlicht empfindliche Schichten, integrierte Sicherheitsmerkmale/Sicherheitsstoffe usw.) aufweisen. Weiterhin ist es möglich vor und nach dem Extrudieren der einzelnen Kunststoffschichten einen Druckvorgang zu integrieren. Das so verarbeitete Trägermaterial weist in diesem Zustand alle für eine Laserpersonalisierung notwendigen Eigenschaften auf.
Dieses Trägermaterial kann in Rollendruckmaschinen (Wertdruckrotation) mit einem hochwertigen Sicherheitsdruck (Motive, Legendentexte, unbedruckte Bereiche für z.B. das spätere Einbringen des Lichtbildes usw.) versehen werden.

Das Trägermaterial wird durch den Druckvorgang abbildungseitig auf die späteren Einzelnutzen aufgeteilt. Nach dem Druckvorgang kann in einem kontinuierlichen Prozess der Karteneinzelnutzen ausgestanzt und wenn gewünscht, anschließend mit einem beidseitigen Schutzlaminat versehen werden. Auch das Schutzlaminat kann als Mehrschichtverbund mit integrierten Sicherheitsmerkmalen und einer für die Laserbeschriftung (Lasergravur) geeigneten Dotierung ausgerüstet sein.

Das oben beschriebenen Fertigungsverfahren und die Herstellung von Sicherheitsprodukten ist möglich, weil in den Verarbeitungsstufen auf die angewendete Technologie abgestimmte Kunststoffe und Kunststoffkombinationen eingesetzt werden, die gleichzeitig eine einfache Verarbeitung in standardisierten Prozessen (Extrusion von Kunststoffen, Ausstattung dieser Kunststoffe mit Stoffen [Dotierung], die eine Beschriftung mittels Laserstrahl gewährleisten) erlauben.

Die für den Kartenkörper zum Einsatz kommenden Kunststoffe sind z.B. leicht zu verarbeitende Polyethylene, Polypropylene, Polyamid usw. sowie PVC. Für den äußeren Schutz können z.B. Folienverbunde aus Polyethylenen und Polyester eingesetzt werden, die einfach auflaminiert werden können. Dadurch, daß jede dieser einzelnen Schichten Dotierungen enthält, die für bestimmte Laserwellenlängen empfindlich sind, ist die Personlisierung der Karten mittels Lasertechnik sehr sicher.

Die Schwärzung (Abbildung) ist über die Dicke der dotierten Schicht oder Schichten des Dokuments vorhanden. Weiterhin ist es möglich, die Dotierungen der Schichten so einzustellen, daß diese auf unterschiedliche Laserwellenlängen reagieren. So können Schichten vorhanden sein, die auf einen Nd:Yag - Laser reagieren und Schichten, die z.B. auf eine CO₂ - Laser reagieren. Möglich sind so auch farbige Ausprägungen von gelaserten Daten (Bild- und Textdaten).

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Im folgenden wird die Erfindung anhand von lediglich einem Ausführungsweg darstellenden Zeichnungen näher erläutert.

### Es zeigen:

- Figur 1:: Schematisiert einen ersten Verfahrensschritt zur Herstellung eines beschichteten Trägermaterials;
- Figur 2:: Die Weiterverarbeitung des Trägermaterials, welches nach Figur 1 hergestellt wurde;
- Figur 3:: Die endgültige Verarbeitung des Trägermaterials von der Rollenware zur Kartenware;
- Figur 4:: Darstellung der Herstellung von Deckverbundfolie als Zwischenschritt

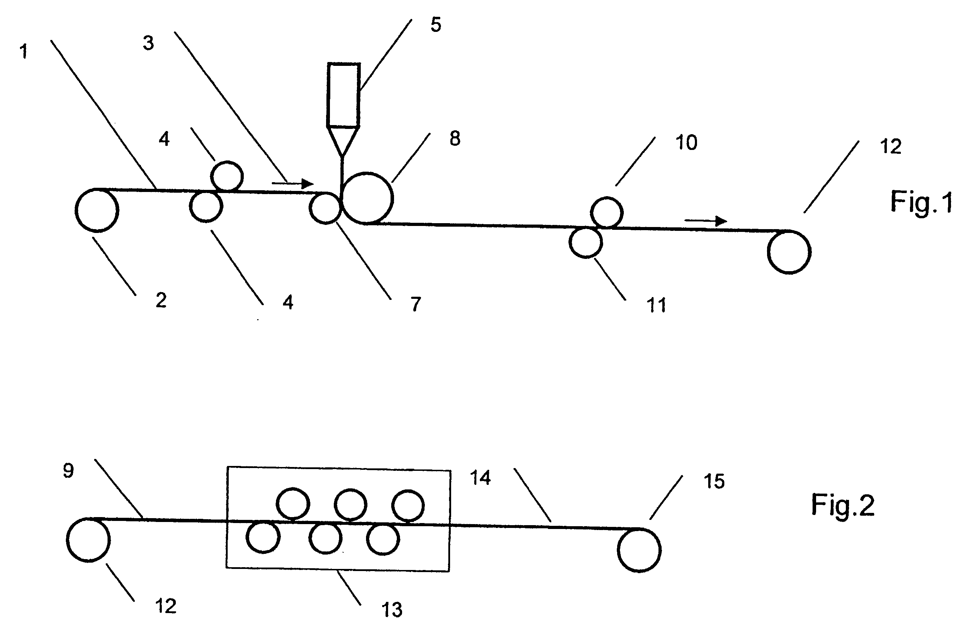

In Figur 1 ist allgemein ein Trägermaterial 1 dargestellt, welches bevorzugt aus einem Kunststoffmaterial besteht, welches aber ebenso aus einem Papier bestehen könnte. Dieses Trägermaterial 1 ist auf einer Rolle 2 aufgewickelt, welche in Pfeilrichtung 3 abgezogen wird. Hierbei ist es dann in einem ersten Verfahrensschritt vorgesehen, daß eine oder beide Seiten des Trägermaterials von einem Druckwerk 4 bedruckt werden.

Danach wird das ein- oder zweiseitig bedruckte Trägermaterial einer Extrusionsbeschichtungsanlage 5 zugeführt, wo eine erste Kunststoffbeschichtung in Form einer Auftragsbahn 6 auf die Oberseite und/oder Unterseite des Trägermaterials 1 erfolgt.

Das so mit einer, zumindest in einem Teilbereich durchsichtigen Schicht beschichtete Trägermaterial 1 wird nun durch Anpreßwalze 7 und durch Kühlwalze (Temperier-walze) 8 hindurch geführt, um die Auftragsschicht (Kunststoffilm) mit dem Trägermaterial fest zu verbinden.
Hierbei kann es vorgesehen werden, daß die Kühlwalze auch Prägungen in das Material der Auftragsbahn 6 einbringt.

Das so beschichtete Trägermaterial 9 wird nun den Druckwerken 10 und 11 zugeführt, wobei sowohl die Oberseite als auch die Unterseite bedruckt werden kann. Das so hergestellte beschichtete Trägermaterial 9 wird dann auf der Rolle 12 aufge-wickelt.

Im nächsten Verfahrensschritt nach Figur 2 wird die Rolle 12 wiederum im Pfeilrichtung 3 abgewickelt und das beschichtete Trägermaterial 9 einem Vielfachdruckwerk 13 zugeführt, wo eine Reihe von Sicherheitsmerkmalen aufgedruckt werden können, wie z.B. Guillochen, UV-Sicherheitsmerkmale und dergleichen mehr. Das so hergestellte, beschichtete und bedruckte Trägermaterial 14 wird dann wiederum im Form einer Rolle 15 aufgewickelt.

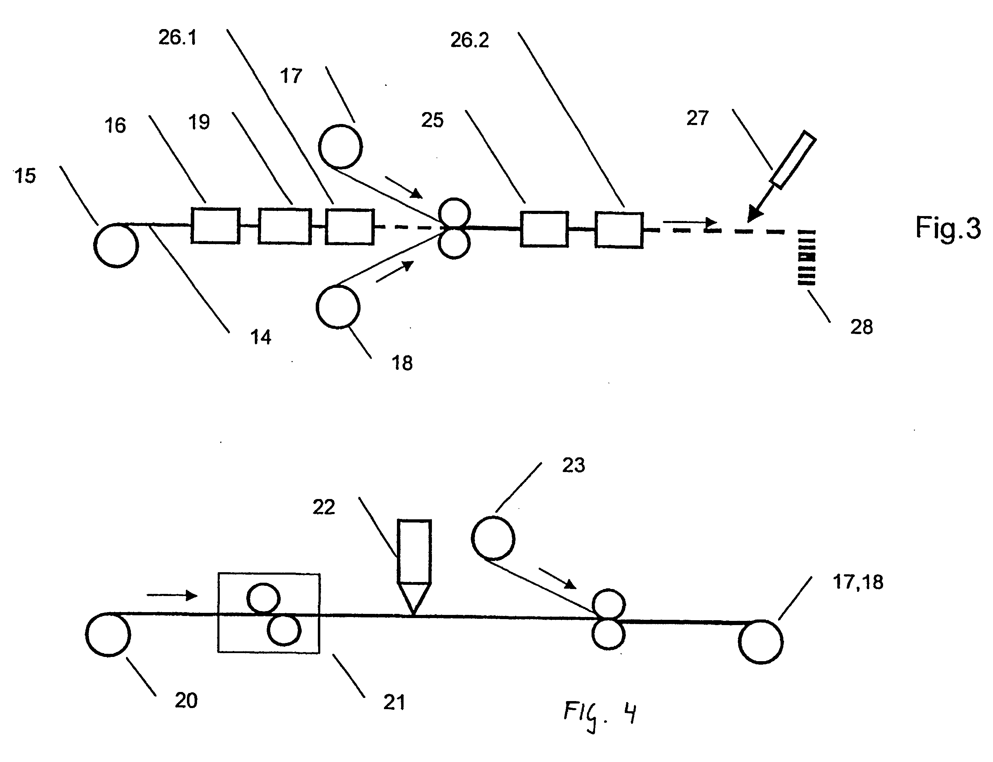

Die Figur 3 zeigt den dritten Verfahrensschritt, in dem das Trägermaterial 14 wiederum von der Rolle 15 abgezogen wird und zunächst einer Vorrichtung 16 für die Einbringung weiterer Sicherheitsmerkmale zugeführt wird. Diese Vorrichtung 16 kann
z.B. einen Laser enthalten, welcher in die bereits schon vorhandenen Schichten des beschichteten und bedruckten Trägermaterials 14 entsprechende Schwärzungen (Markierungen) vornimmt. Es können ebenso Gravuren oder Perforationen vorgenommen werden.

Danach erfolgt der Auftrag eines Haftvermittlers 19, das Ausstanzen der Einzelnutzen mit der Stanze 26.1 und die Laminierung mit einer oberen und unteren Deckfolie oder Deckverbundfolie 17, 18. Das beschichtete, bedruckte und als Einzelnutzen ausgestanzte Trägermaterial 14 wird dabei von oben und unten mit der Laminatfolie umschlossen und dauerhaft fest miteinander verbunden.

Vor dem Ausstanzen kann das laminierte Trägermaterial einer Prägestation 25 zugeführt werden, wo die Oberfläche des Decklaminates geprägt wird.

Damit sind die Sicherheitsdokumente als endlos laminiertes Trägermaterial 24 fertiggestellt. Sie werden anschließend einer Stanze 26.2 zugeführt und nutzenweise als kartenförmige Dokumente ausgestanzt.

Danach werden die Karten einer Laserstation 27 zugeführt, wo weitere Merkmale eingebrannt werden können, wobei das Einbrennen nicht auf die Oberfläche beschränkt ist, sondern es kann mit dem Laser jede beliebige Schicht in dem mehrschichtigen laminierten Trägermaterial 24 erreicht werden. Danach werden die so hergestellten Karten in der Position 28 magaziniert.

Die Herstellung der Deckverbundfolien 17, 18 für obere und unter Decklaminat wird anhand der Figur 4 erläutert.

Dabei wird die erste Folienbahn von Rolle 20 abgewickelt, in Pfeilrichtung einem Druckwerk 21 zugeführt und dort ein- oder beidseitig mit Sicherheitsfarben bedruckt. Anschließend wird in Position 22 ein Kaschierkleber auf diese Folie aufgetragen und die zweite Folienbahn von Rolle 23 aufkaschiert.

Vorteil der genannten Maßnahmen ist, daß die so hergestellten Karten eine außerordentlich gute Paßgenauigkeit aufweisen, daß sie einen guten Haftverbund ergeben, weil sie ja als Rollenware durchgehend laminiert wurden, so daß beim Laminieren keine Probleme in den Randbereichen entstehen, und daß sie sehr schnell und rationell herzustellen sind.

Insbesondere besteht bei dem erfindungsgemäßen Verfahren der Vorteil, daß es sich um ein weitestgehend kontinuierliches Herstellungsverfahren für Dokumente handelt. Wobei die verwendeten Einzelmaterialien als Rollenware eingesetzt und verarbeitet werden und somit der kontinuierliche Prozeß bis zur Vereinzelung der Nutzen am Prozeßende gewährleistet ist. Das Sicherheitsprodukt kann somit rationell aus mehreren sicherheitsfunktionellen Einzelschichten aufgebaut werden. Als Träger-material 1 kann eine Papierbahn oder eine Papier-/Kunststofrbahn verwendet werden, die besonders kostengünstig herstellbar ist und mit den Deckverbundfolien 17,18 kontinuierlich und paßgenau zu einem Mehrschichtverbund gefertigt werden.

Durch den Einsatz von Papier oder Papier-/Kunststoffverbunde ist die Verwendung folgender Sicherheitsmerkmale, wie z.B. das Wasserzeichen, Planchetten, fluoreszierende sichtbare und unsichtbare Fasern, möglich,. D.h. es wird erstmals die Möglichkeit geboten, auf besonders einfache aber hochgenaue Weise papierförmiges Trägermaterial paßgenau mit Kunststoffdeckfolien zu laminieren, wodurch die vorher erwähnten Vorteile erreicht werden. Die einzelnen Kunststoffschichten können dabei laseraktiv eingestellt sein.

Die so hergestellten Karten können nun mit herkömmlichen Laseranlagen personalisiert werden, was vorher nicht möglich war. Unter Personalisierung wird hierbei das Einbringen von persönlichen Merkmalen des Trägers in das fertiggestellte Dokument verstanden, nämlich z.B. das Einbringen des Lichtbildes, das Einbringen des Namens, der Unterschrift und der ICAO-Zeilen.

### Zeichnungslegende

- 1: Trägermaterial
- 2: Rolle (Abwicklung)
- 3: Fertigungsrichtung
- 4: Druckwerk
- 5: Extrusionbeschichtung
- 6: Auftragsbahn (Folienfilm)
- 7: Anpreßwalze
- 8: Kühlwalze (Temperierwalze)
- 9: beschichtetes Trägermaterial
- 10: Druckwerk
- 11: Druckwerk
- 12: Rolle (Aufwicklung)
- 13: Druckwerk
- 14: beschichtetes und bedrucktes Trägermaterial
- 15: Rolle (Abwicklung)
- 16: Vorrichtung für Einbringen von Sicherheitsmerkmale
- 17: Deckverbundfolie
- 18: Deckverbundfolie
- 19: Haftvermittler
- 20: Rolle (Abwicklung) Kunststoffolie 1
- 21: Druckwerk
- 22: Kaschierkleberauftrag
- 23: Rolle (Abwicklung) Kunststoffolie 2
- 24: laminiertes Trägermaterial
- 25: Prägestation
- 26.1: Stanze Einzelnutzen Trägermaterial
- 26.2: Stanze Einzelnutzen laminiertes Trägermaterial (Karte)
- 27: Laserstation
- 28: Magazinierung

## Patentansprüche

1. Mehrschichtiges Sicherheitsprodukt, weiches aus einem bedruckbaren Trägermaterial (1) und mindestens einer Deckfolie (17,18) besteht, wobei das Trägermaterial mit mindestens einer Kunststoffbeschichtung fest verbunden ist, die laseraktive Pigmente enthält, wobei die mindestens eine Deckfolie auf das mit der mindestens einen Kunststoffbeschichtung versehene Trägermaterial auflaminiert ist, **dadurch gekennzeichnet, dass** die Kunststoffbeschichtung auf das Trägermaterial aufextrudiert ist.

2. Mehrschichtiges Sicherheitsprodukt nach Anspruch 1, **dadurch gekennzeichnet, dass** die laseraktiven Pigmente im wesentlichen mittels Laserstrahlung einer bestimmten Wellenlänge anregbar sind.

3. Mehrschichtiges Sicherheitsprodukt nach einem der Ansprüche 1 bis 2, **dadurch gekennzeichnet, dass** das Trägermaterial aus Papier oder Kunststoff besteht.

4. Mehrschichtiges Sicherheitsprodukt nach einem der Ansprüche 1 bis 3, **dadurch gekennzeichnet, dass** das Trägermaterial mit Sicherheitsmerkmalen, wie Wasserzeichen und/oder Melierfasern ausgestattet ist.

5. Mehrschichtiges Sicherheitsprodukt nach einem der Ansprüche 1 bis 4, **dadurch gekennzeichnet, dass** die mindestens eine Deckfolie laseraktive Pigmente enthält.

6. Mehrschichtiges Sicherheitsprodukt nach einem der Ansprüche 1 bis 5, **dadurch gekennzeichnet, dass** die mindestens eine Kunststoffbeschichtung und/oder die mindestens eine Deckfolie Prägungen aufweist.

7. Mehrschichtiges Sicherheitsprodukt nach einem der Ansprüche 1 bis 6, **dadurch gekennzeichnet, dass** die mindestens eine Kunststoffbeschichtung bedruckt ist.

8. Verfahren zur Herstellung mehrschichtiger Sicherheitsprodukte, wobei ein bedruckbares Trägermaterial (1) als Rollenware mit mindestens einer Kunststoffbeschichtung versehen wird, die laseraktive Pigmente enthält, anschließend das Trägermaterial mit der mindestens einen Kunststoffbeschichtung mit mindestens einer Deckfolie (17, 18) hochgenau zusammengeführt und laminiert wird, **dadurch gekennzeichnet, dass** die Kunststoffbeschichtung auf das Trägermaterial aufextrudiert wird.

9. Verfahren nach Anspruch 8, **dadurch gekennzeichnet, dass** das Trägermaterial mit der mindestens einen Kunststoffbeschichtung als Rollenware vorliegt und nach der Laminierung wieder als Rollenware abgewickelt wird.

10. Verfahren nach Anspruch 8, **dadurch gekennzeichnet, dass** das Trägermaterial mit der mindestens einen Kunststoffbeschichtung vor der Laminierung vereinzelt wird und zusammen mit der mindestens einen Deckfolie nach der Laminierung als Endlosware vorliegt.

11. Verfahren nach einem der Ansprüche 8 bis 10, **dadurch gekennzeichnet, dass** nach der Laminierung mit der mindestens einen Deckfolie Einzelnutzen ausgestanzt werden.

12. Verfahren nach einem der Ansprüche 8 bis 11, **dadurch gekennzeichnet, dass** vor der Beschichtung des Trägermaterials mit der mindestens einen Kunststoffbeschichtung das Trägermaterial in einem ein- oder mehrstufigen Prozess bedruckt wird.

13. Verfahren nach einem der Ansprüche 8 bis 12, **dadurch gekennzeichnet, dass** die mindestens eine Kunststoffbeschichtung bedruckt und/oder geprägt wird, bevor das Trägermaterial mit der mindestens einen Kunststoffbeschichtung mit der mindestens einen Deckfolie zusammengeführt und laminiert wird.

14. Verfahren nach einem der Ansprüche 8 bis 13, **dadurch gekennzeichnet, dass** das Trägermaterial aus Papier oder Kunststoff besteht.

15. Verfahren nach einem der Ansprüche 8 bis 14, **dadurch gekennzeichnet, dass** das Trägermaterial mit Sicherheitsmerkmalen, wie Wasserzeichen und/oder Melierfasern ausgestattet ist.

16. Verfahren nach einem der Ansprüche 8 bis 15, **dadurch gekennzeichnet, dass** die mindestens eine Deckfolie laseraktive Pigmente enthält.

17. Verfahren nach einem der Ansprüche 8 bis 16, **dadurch gekennzeichnet, dass** Sicherheitsmerkmale in der mindestens einen Kunststoffbeschichtung und/oder in der mindestens einen Deckfolie mittels Laser durch Aktivierung der laseraktiven Pigmente erzeugt werden, wobei die Aktivierung der laseraktiven Pigmente im wesentlichen durch Laserstrahlung einer bestimmten Wellenlänge erfolgt, die auf das verwendete laseraktive Pigment abgestimmt ist.

18. Verfahren nach Anspruch 17, **dadurch gekennzeichnet, dass** die durch Laser erzeugten Sicherheitsmerkmale mindestens teilweise personalisierbare Sicherheitsmerkmale sind.

19. Verfahren nach einem der Ansprüche 17 bis 18, **dadurch gekennzeichnet, dass** die Erzeugung von Sicherheitsmerkmalen mittels Laser in der mindestens einen Kunststoffbeschichtung nach dem Aufbringen der mindestens einen Kunststoffbeschichtung mittels Extrusion und/oder nach dem Auflaminieren der mindestens einen Deckfolie erfolgt.

## Claims

1. A multi-layer security product consisting of an imprintable carrier material (1) and at least one cover film (17, 18), the carrier material being firmly connected to at least one plastic coating containing laser-active pigments, the at least one cover film being laminated on the carrier material provided with the at least one plastic coating, **characterized by** that the plastic coating is extruded on the carrier material.

2. A multi-layer security product according to claim 1, **characterized by** that the laser-active pigments are essentially excitable by laser radiation having a specific wavelength.

3. A multi-layer security product according to one of claims 1 and 2, **characterized by** that the carrier material is made of paper or plastic.

4. A multi-layer security product according to one of claims 1 to 3, **characterized by** that the carrier material is provided with security features, such as watermarks and/or security fibers.

5. A multi-layer security product according to one of claims 1 to 4, **characterized by** that the at least one cover film includes laser-active pigments.

6. A multi-layer security product according to one of claims 1 to 5, **characterized by** that the at least one plastic coating and/or the at least one cover film includes embossings.

7. A multi-layer security product according to one of claims 1 to 6, **characterized by** that the at least one plastic coating is imprinted.

8. A method for producing multi-layer security products, wherein an imprintable carrier material (1) in wound-up condition is provided with at least one plastic coating containing laser-active pigments, then the carrier material with the at least one plastic coating is brought together in a highly precise manner and laminated with at least one cover film (17, 18), **characterized by** that the plastic coating is extruded on the carrier material.

9. A method according to claim 8, **characterized by** that the carrier material with the at least one plastic coating is in wound-up condition and will, after lamination, be wound off again in wound-up condition.

10. A method according to claim 8, **characterized by** that the carrier material with the at least one plastic coating is individualized prior to lamination and will together with the at least one cover foil, after lamination, exist in an endless condition.

11. A method according to one of claims 8 to 10, **characterized by** that after lamination with the at least one cover film, individual security products are punched out.

12. A method according to one of claims 8 to 11, **characterized by** that prior to the application of the at least one plastic coating on the carrier material, said carrier material is imprinted in a single or multi-step process.

13. A method according to one of claims 8 to 12, **characterized by** that the at least one plastic coating is imprinted and/or embossed, before the carrier material with the at least one plastic coating is brought together and laminated with the at least one cover film.

14. A method according to one of claims 8 to 13, **characterized by** that the carrier material is paper or plastic.

15. A method according to one of claims 8 to 14, **characterized by** that the carrier material is provided with security features, such as watermarks and/or security fibers.

16. A method according to one of claims 8 to 15, **characterized by** that the at least one plastic coating contains laser-active pigments.

17. A method according to one of claims 8 to 16, **characterized by** that the security features in the at least one plastic coating and/or in the at least one cover film are produced by activation of the laser-active pigments, said activation of the laser-active pigments essentially taking place by laser radiation of a specific wavelength suited to the used laser-active pigment.

18. A method according to claim 17, **characterized by** that the security features produced by a laser are at least in part personalizable security features.

19. A method according to one of claims 17 to 18, **characterized by** that the production of security features by means of a laser in the at least one plastic coating takes place after application of the at least one plastic coating by means of extrusion and/or after the lamination of the at least one cover film.

## Revendications

1. Produit de sécurité à couches multiples comprenant un support (1) et pour le moins une feuille de couverture (17, 18), le support étant rigidement fixé à une couche en plastique comprenant des pigments laser actifs, la pour le moins une feuille de couverture étant laminée sur le support pourvu de pour le moins une couche en plastique, **caractérisé en ce que** la couche en plastique est extrudée sur le support.

2. Produit de sécurité selon la revendication 1, **caractérisé en ce que** les pigments laser actifs sont excitables essentiellement par rayonnement du laser d'une longueur d'onde spécifique.

3. Produit de sécurité selon une des revendications 1 à 2, **caractérisé en ce que** le support consiste en papier ou matière plastique.

4. Produit de sécurité selon une des revendications 1 à 3, **caractérisé en ce que** le support est équipé de signes de sécurité, comme p.ex. des filigranes et/ou fibres chinées.

5. Produit de sécurité selon une des revendications 1 à 4, **caractérisé en ce que** la pour le moins une feuille de couverture comprend des pigments laser actifs.

6. Produit de sécurité selon une des revendications 1 à 5, **caractérisé en ce que** la pour le moins une couche en plastique et/ou la pour le moins une feuille de couverture comprend des estampages.

7. Produit de sécurité selon une des revendications 1 à 6, **caractérisé en ce que** la pour le moins une couche en plastique est imprimée.

8. Méthode pour la production de produits de sécurité à couches multiples, un support (1) imprimable en forme de rouleau étant pourvu de pour le moins une couche en plastique comprenant des pigments laser actifs, après le support étant réuni et laminé à haute précision avec la pour le moins une feuille de couverture (17, 18), **caractérisée en ce que** la couche en plastique est extrudée sur le support.

9. Méthode selon la revendication 8, **caractérisée en ce que** le support avec la pour le moins une couche en plastique est en forme de rouleau et est déroulé après la lamination de nouveau en forme de rouleau.

10. Méthode selon la revendication 8, **caractérisée en ce que** le support avec la pour le moins une couche en plastique est individualisé avant la lamination et existe en commun avec la pour le moins une feuille de couverture comme matériel sans fin après la lamination.

11. Méthode selon une des revendications 8 à 10, **caractérisée en ce qu'**après la lamination avec la pour le moins une feuille de couverture des pièces en multi-poses sont découpées.

12. Méthode selon une des revendications 8 à 11, **caractérisée en ce qu'**avant la couverture du support avec la pour le moins une couche en plastique, le support est imprimé en un procès à une ou plusieurs étapes.

13. Méthode selon une des revendications 8 à 12, **caractérisée en ce que** la pour le moins une couche en plastique est imprimée et/ou estampée, avant que le support avec la pour le moins une couche en plastique soit réuni et laminé avec la pour le moins feuille de couverture.

14. Méthode selon une des revendications 8 à 13, **caractérisée en ce que** le support consiste en papier ou matière plastique.

15. Méthode selon une des revendications 8 à 14, **caractérisée en ce que** le support est équipé de signes de sécurité, comme p.ex. des filigranes et/ou fibres chinées.

16. Méthode selon une des revendications 8 à 15, **caractérisée en ce que** la pour le moins une feuille de couverture comprend des pigments laser actifs.

17. Méthode selon une des revendications 8 à 16, **caractérisée en ce que** des signes de sécurité sont générés dans la pour le moins une couche en plastique et/ou la pour le moins une feuille de couverture au moyen de laser par activation des pigments laser actifs, ladite activation étant faite essentiellement par rayonnement de laser d'une longueur d'onde spécifique étant ajustée au pigment laser actif utilisé.

18. Méthode selon la revendication 17, **caractérisée en ce que** les signes de sécurité générés par laser sont pour le moins partiellement des signes de sécurité personnalisables.

19. Méthode selon une des revendications 17 à 18, **caractérisée en ce que** la génération des signes de sécurité au moyen de laser dans la pour le moins une couche en plastique se fait après l'application de la pour le moins une couche en plastique au moyen d'extrusion et/ou après la lamination de la pour le moins une feuille de couverture.
